# EUROPEAN PATENT APPLICATION

(11) **EP 2 194 438 A1**
(43) Date of publication of application: **09.06.2010**
(21) Application number: 08253845.5
(22) Date of filing: 28.11.2008
(51) Int. Cl.: G06F 1/16

(54) **Media adaptor**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

A media adaptor 1 for connection of computer streaming equipment to a speaker unit can be installed in an existing docking station 40 of a speaker unit configured for operation with a personal digital audio player, by coupling a socket 2 to the electrical plug connector 43 provided in the docking station. The adaptor may itself be provided with a similar plug connector 3 for connection to the socket of the personal digital audio player which would, in conventional use, couple directly to the connector 43 in the docking station.

## Description

This invention relates to equipment for interconnecting media playback equipment.

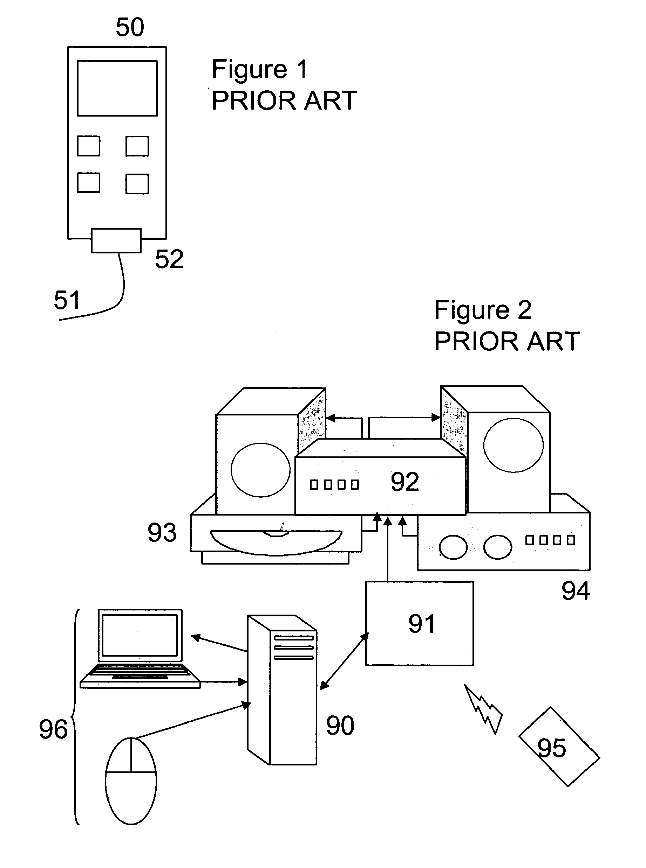

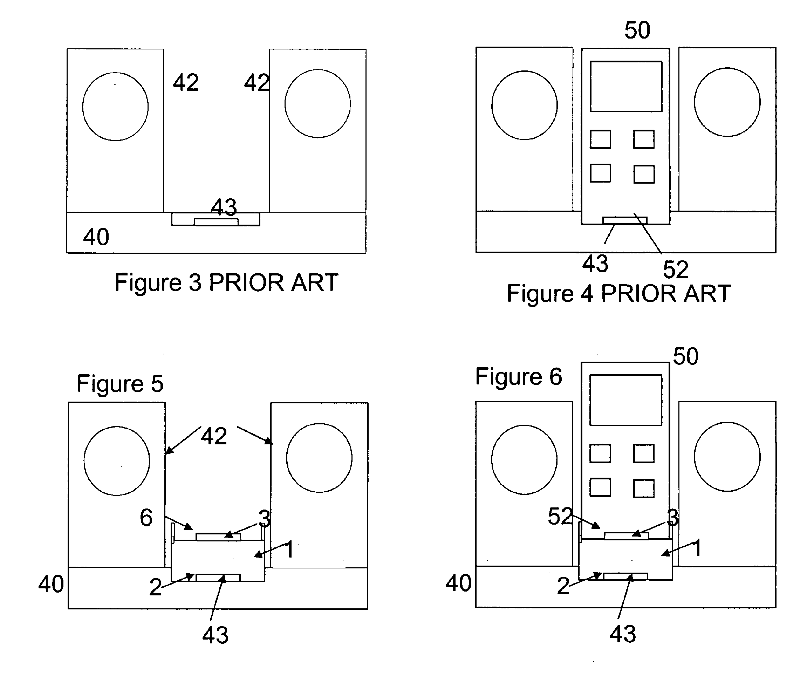

Digital music sales, and ownership of digital playback equipment such as MP3 players, have grown rapidly in the last few years. This growth has led to a change in the way people to listen to music at home. Rather than listening to recordings stored on a physical medium such as compact discs or cassette tapes, the recording is stored in digital memory. As shown in Figure 1, a standard personal digital audio player 50 has a socket 52 for a connection lead 51 to allow downloading of digital audio files from a computer. This connection also provides a power supply. The same connection socket 52 can be used to connect to headphones to allow the user to listen to the stored audio files. External speaker systems are also available, as illustrated in Figures 3 and 4. These provide a docking station 40 for the personal digital audio player 50. The docking station includes a connection 43 to couple to the socket 52 on the digital player 5, to allow audio signals to be transmitted to the speakers 42.

An alternative way of listening to digital music on a home system is illustrated in Figure 2. In this system digital audio data is streamed from a computer 90 or network-based server to a 'media adaptor' 91 which connects by cable into an existing HiFi system 92 in the same way that other external audio sources such as CD decks 93 or FM/AM radio tuners 94 may be connected. There are several standard connection types. The media adaptor 91 may be controlled by a remote control unit 95 or through other peripherals 96 connected to the computer 90.

The present invention provides a media adaptor unit comprising a docking unit for co-operation with a docking station of a speaker unit configured for docking with a personal digital audio apparatus, comprising communication means for communicating with a source of digitally streamed audio data, an electromechanical coupling for connection to the speaker unit, and a media adaptor unit for converting the streamed data into an audio output for delivery to the speaker connection. In the preferred embodiment the media adaptor unit comprises a further electromechanical connection for coupling to a personal digital audio apparatus.

This invention allows a speaker unit compatible with a personal digital audio player to be connected to an external computer or network connection. In the preferred embodiment the media adaptor is connected by a wireless communications link to a wireless hub through which it can communicate with a computer or, by way of a communications network such as the internet, to a remote server. Wired connection to the hub is also possible however.

In a preferred arrangement the media adaptor of the invention also provides a male connector for connection to a personal digital audio player. This male connector can be integrated into the adaptor as a dock for the personal digital audio player, avoiding the need for cables. Many such speaker unit docks include a power supply connection to allow charging of the personal digital audio player, and this connection can be used in the same way to supply power to the adaptor. It also avoids the need for trailing wires, since the media adaptor can be configured so as to fit in the personal digital audio player dock.

This facility to connect the adaptor to a personal digital audio player also allows a single control unit, typically a remote control unit, to control the personal digital audio player as well as the media adaptor, and allows the user to synchronise the tracks on the personal digital audio player with the computer or server by exchanging data between them to provide automatic updates of new music recently added to or removed from one or the other device.

The connection to the personal digital audio player also gives it the ability to wirelessly connect with other similar wireless media adaptors. This allows the music on the personal digital audio player to be played on multiple speakers simultaneously.

Although reference is made to "personal digital audio players" in this specification, the term is not intended to be limitative and embraces devices having additional capabilities such as video, telephony, etc.

An embodiment of the invention will now be described, by way of example, with reference to the drawings in which:
Figure 1 illustrates a typical personal digital audio player
Figure 2 illustrates a prior art media adaptor in operative connection with a computer and a hifi system
Figure 3 illustrates a prior art speaker system for use with a personal digital audio player
Figure 4 illustrates the manner in which the digital audio player of Figure 1 co-operates with the speaker system of Figure 3
Figure 5 illustrates an adaptor of the invention in operative connection with a speaker dock
Figure 6 illustrates the adaptor of the invention in operative connection with a speaker dock and a personal digital audio player
Figure 7 illustrates in more detail an adaptor according to a first embodiment of the invention
Figure 8 illustrates an adaptor according to a second embodiment of the invention
Figure 9 is a schematic illustration of the operative elements of the adaptor of figure 8

Figures 1 to 4 have already been discussed with relation to the prior art.

Figures 5 shows how the media adaptor 1 of the invention can be installed in an existing docking station 40, by coupling a socket 2 to the electrical plug connector 43 provided in the docking station. In this embodiment, the adaptor is itself provided with a similar plug connector 3 for connection, as shown in Figure 6, to the socket 52 of the personal digital audio player 50 which would, in conventional use, couple directly to the connector 43 in the docking station.

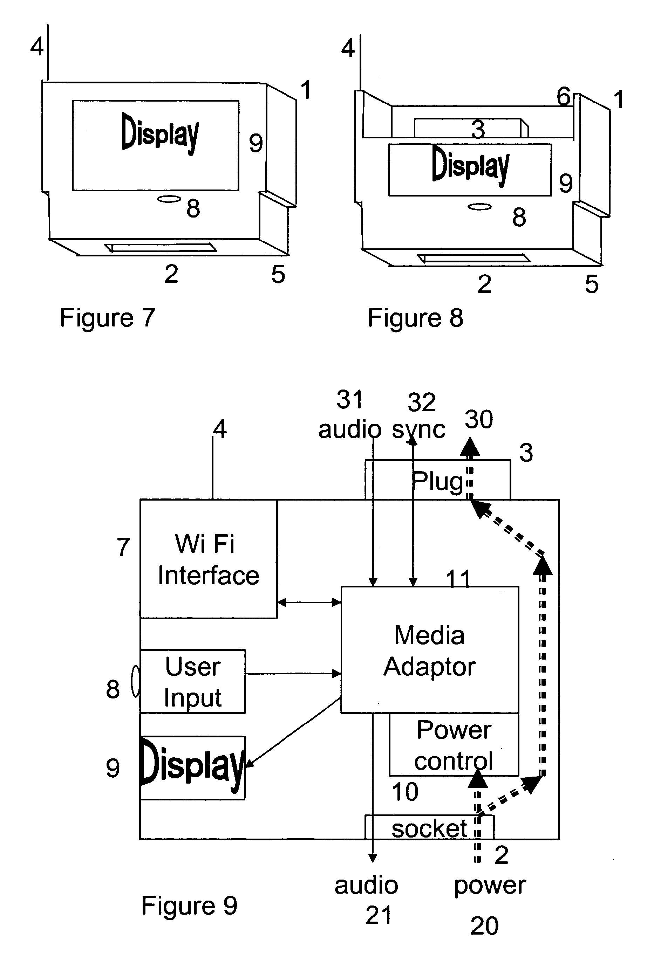

Two embodiments of the adaptor will now be described in more detail, with reference to Figures 7, 8 and 9.

Figure 7 depicts a first embodiment of a media adaptor 1. The lower end 5 of the adaptor 1 is shaped to fit in the docking station 40 of a speaker unit 40, as shown in Figure 5. This shape includes a socket 2 configured similarly to the socket 52 of a personal digital audio player such as an MP3 player so that it can be coupled to the electrical plug connection 43 in the docking station 40.

Devices having different configurations may be necessary as the docking stations of existing speaker units vary in shape. The illustration in Figure 1 should be taken as illustrative and not limiting to any particular mechanical docking configuration.

The adaptor 1 also has an antenna 4 for wireless communication with a computer 90 (Figure 2) through which audio data may be streamed to the adaptor. The adaptor 1 may also have means for interfacing with a human operator, such as an input 8 for signals from a remote control unit, and a display unit 9. However, either or both of these functions may be substituted by a separate human interface connected to the adaptor by way of the connection 4, either directly or through the computer 90.

The adaptor of Figure 8 is similar to that of Figure 7, but in addition incorporates a docking station 6 similar to that provided in the speaker unit 40, and having an electrical plug connector 3, to which a personal digital audio player 50 may be connected as shown in Figure 6. Alternatively, connection to a personal digital audio player could be made using a lead 51 (see Figure 1)

Figure 9 depicts the elements of the adaptor of Figure 8. The adaptor of Figure 7 is similar, except for the absence of the plug connection 3 and the connections to it.

The lower end 5 of the adaptor 1 is shaped so that it fits neatly into any compatible dock. As shown in Figure 5, the adaptor plugs 1 into a speaker unit, using the docking point 40 usually used by an personal digital audio player 50.

The adaptor 1 is provided with an electrical socket 2 similar to those provided in personal digital audio players, and having similar connections. The plug connection 43 in the docking station provides a power supply 20 to this socket. Electrical power is fed from the power connection 20 to a power control unit 10 which supplies power to the other components 7, 8, 9, 11 of the unit 1.

The plug/socket connection 2/43 as provides an output 21 for providing an audio signal to the speaker unit 43.

The adaptor 1 contains at least one wireless adapter 7 to receive and make wireless signals to other wireless devices such as; "Network Attached Storage" (NAS) devices, Personal Computers (PCs), mobile telephones, routers, remote controls, and other media adaptors.

The principal media adaptor functions are performed by a central unit 11. These functions include the reception of streamed data from an external source 4/7, buffering, conversion to an audio signal, selection of tracks, etc are performed. The unit is controlled through a user interface which includes a user input 8 such as a remote control receiver, and an output such as a visual display 9 to indicate whether the device is switched on, the current mode of operation, etc.

In the embodiment of Figures 8 and 9 the adaptor unit 1 is provided with a plug connector 3 for connection of the adaptor 1 to the personal digital audio player 50 that would normally fit in the dock 43. As shown this connector is a plug 3 integrated into the top of the unit 1, with a dock 6 for the player, but the connection may instead be provided via a cable. The plug 3 provides the usual connections between a personal digital player and a computer interface 7, including a power connection 30, an audio output 31 and a control channel 32 for providjng functions such as synchronisation of the data stored on the device with the data stored on the user's computer.

The media adaptor functions 11 can be used to control the personal digital audio player 50 as well as to stream media from other sources by way of the interface 7, to delivered audio content to the speakers 42, and it can itself be controlled by a separate remote control.

The device has the ability to synchronise the tracks on the personal digital audio player with other sources such as PC's or NAS devices. The interface 7 also provides the capability to make a wireless connection with other similar wireless media adaptors, allowing the same music to be played on other speakers at the same time.

## Claims

1. A media adaptor unit comprising a docking unit for co-operation with a docking station of a speaker unit configured for docking with a personal digital audio apparatus, comprising communication means for communicating with a source of digitally streamed audio data, an electromechanical coupling for connection to the speaker unit, and a media adaptor unit for converting the streamed data into an audio output for delivery to the speaker connection.

2. A media adaptor unit according to claim 1 comprising a further electromechanical connection for coupling to a personal digital audio apparatus.

3. A media adaptor according to claim 2 wherein the further electromechanical coupling is integrated into the adaptor as a dock for the personal digital audio apparatus.

4. A media adaptor unit according to any preceding claim, further comprising a power connection from the speaker unit to the adaptor.

5. A media adaptor according to any preceding claim, configured so as to fit in a dock in the speaker unit configured for engaging a personal digital audio unit.

6. A media adaptor according to any preceding claim provided with wireless communications means for connection to a wireless hub for delivery of streamed data to or from a computer or remote server.

7. A media adaptor according to any preceding claim further comprising means to interconnect with one or more similar wireless media adaptors to allow the audio output to be played on multiple speakers simultaneously.
